# EUROPÄISCHE PATENTANMELDUNG

(11) **EP 1 113 410 A2**
(43) Veröffentlichungstag der Anmeldung: **04.07.2001**
(21) Anmeldenummer: 00123095.2
(22) Anmeldetag: 25.10.2000
(51) Int. Cl.: G09B 29/00

(54) **Verfahren, Bedienteil, Navigationssystem und Schnittstelle zur Darstellung von Ausschnitten einer digitalen Kartenbasis**

(30) Priorität: 30.12.1999 DE 19963764
(71) Anmelder: ROBERT BOSCH GMBH, 70442 Stuttgart (DE)
(72) Erfinder: Winter, Stephan, 30159 Hannover (DE); Hessing, Bernd, 31188 Holle (DE); Jung, Thomas, 60314 Frankfurt (DE); Nordsiek, Walter, 31188 Holle (DE); Binnewies, Olaf, 31134 Hildesheim (DE); Fabian, Thomas, 31139 Hildesheim (DE); Rentel, Bettina, 31180 Giesen (DE); Otte, Dirk, 30880 Laatzen (DE); Tiemann, Dirk, 30675 Hannover (DE)

(57) **Zusammenfassung**

Die vorliegende Erfindung betrifft ein Verfahren, Bedienteil, Navigationssystem und Schnittstelle zur Darstellung von Ausschnitten einer digitalen Kartenbasis, welche ein Abbild von realen geographischen Bereichen ist, auf einem Anzeigegerät, wobei die digitale Kartenbasis Daten von geographischen Elementen enthält. Hierbei wird ein Attribut der geographischen Elemente ausgewertet, welches eine Darstellungspriorität bestimmt, wobei in Abhängigkeit von dem darzustellenden Ausschnitt und der Darstellungspriorität für jedes geographische Element, dem eine Darstellungspriorität zugeordnet ist, festgelegt wird, ob es auf dem darzustellenden Ausschnitt sichtbar ist oder nicht.

## Beschreibung

### Technisches Gebiet

Die Erfindung betrifft ein Verfahren zum Darstellen von Ausschnitten einer digitalen Kartenbasis, welche ein Abbild von realen geographischen Bereichen ist, auf einem Anzeigegerät, wobei die digitale Kartenbasis Daten von geographischen Elementen enthält, gemäß dem Oberbegriff des Anspruchs 1. Die Erfindung betrifft ferner eine digitale Kartenbasis als Abbild von realen geographischen Bereichen, wobei die digitale Kartenbasis Daten von geographischen Elementen enthält und jedem geographischen Element Attribute zugeordnet sind, gemäß dem Oberbegriff des Anspruchs 11. Die Erfindung betrifft ferner ein Bediengerät für ein Navigationssystem mit einem Anzeigegerät zum Darstellen von einem Ausschnitt einer digitalen Kartenbasis, welche ein Abbild von realen geographischen Bereichen ist, wobei die digitale Kartenbasis Daten von geographischen Elementen enthält, gemäß dem Oberbegriff des Anspruchs 17. Die Erfindung betrifft ferner ein Navigationssystem für ein Fortbewegungsmittel, insbesondere für ein Kraftfahrzeug, mit einem Navigationsmodul, welches eine digitale Kartenbasis bereitstellt, und einem mit dem Navigationsmodul verbundenen Bediengerät, welches ein Anzeigegerät zum Anzeigen eines Ausschnittes der digitalen Kartenbasis aufweist, insbesondere zum Ausführen des vorgenannten Verfahrens, gemäß dem Oberbegriff des Anspruchs 24. Die Erfindung betrifft ferner eine Schnittstelle zwischen einer digitalen Kartenbasis, welche ein Abbild von realen geographischen Bereichen ist und Daten von geographischen Elementen enthält, und einem Anzeigegerät zum Darstellen eines Ausschnittes der digitalen Datenbasis, gemäß dem Oberbegriff des Anspruchs 27.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher an einen gewünschten Zielort, ohne dass vorher aufwendig eine Route geplant und entsprechendes Kartenmaterial erworben bzw. studiert werden muss. Hierzu liegen entsprechende, beispielsweise auf Karten, Landkarten oder Straßenkarten basierende, Navigationsdaten in dem Navigationssystem beispielsweise auf CD-ROM als digitale Kartenbasis gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei beispielsweise Daten über Straßen und Wege für Kraftfahrzeuge sowie weitergehende geographische Informationen, wie beispielsweise Berge, Seen, Wälder, Bebauung oder sonstige topographische Elemente, oder weitergehende Informationen, wie Restaurants, Hotels, Sehenswürdigkeiten oder sonstige Informationen.

Hierbei ist die digitale Kartenbasis im wesentlichen ein Abbild des realen Straßennetzes sowie der entsprechenden geographischen Umgebung. Diese Informationen aus der digitalen Kartenbasis werden an einem Bedienteil zur Information des Fahrers auf einem Display angezeigt, wobei zur Erhaltung der Übersichtlichkeit der Darstellung in unterschiedlichen Situationen der Detailgrad bzw. die Anzahl der dargestellten geographischen Merkmale unterschiedlich zu wählen ist. So werden beispielsweise auf einer Übersichtskarte nur Autobahnen dargestellt, während eine Innenstadtkarte Details bis zur Wohnbebauung enthalten soll. Diese Wahl der dargestellten Details der Karte beeinflusst ganz wesentlich die Übersichtlichkeit und Lesbarkeit von auf der Grundlage der digitalen Kartenbasis dargestellten Karten, was besonders bei Darstellungen in Fahrzeugen wichtig ist, da ein Fahrer mit möglichst einem Blick alle notwendigen Informationen für die Routenführung erfassen können soll. Hierbei können die Kartendarstellungen sinnvoll nicht nach allgemein festgelegten Regeln erstellt werden, sondern es ist eine relative Wichtung der Darstellungselemente notwendig. Beispielsweise darf eine Übersichtskarte des Ruhrgebietes sinnvollerweise nicht alle Autobahnen enthalten. Eine Karte mit dem gleichen Maßstab in Arizona könnte demgegenüber durchaus sehr kleine Straßen sinnvollerweise enthalten.

Bei Navigationssystemen für Kraftfahrzeuge ist es sinnvoll, das Navigationsmodul, welches die digitale Kartenbasis zur Verfügung stellt, von den darstellenden Geräten zu trennen und auch getrennt voneinander zu entwickeln. Hierbei ist dann eine vordefinierte Schnittstelle zum Zugriff auf die digitale Kartenbasis des Navigationsmoduls notwendig. Diese Schnittstelle muss es ermöglichen im darstellenden Gerät in unterschiedlichen Maßstäben digitale Karten mit guter Übersichtlichkeit zu erstellen.

Derartige Schnittstellen sind beispielsweise von den Firmen NAVTECH (http://www.navtech.com) oder Etak Inc. (http://www.etak.com) bekannt. Diese Schnittstellen ermöglichen einen Zugriff auf das physikalische Speicherformat der digitalen Kartenbasis. In unterschiedlichen Fahrzeugen werden allerdings unterschiedliche digitale Kartenbasen eingesetzt. Außerdem kann es beim Zugriff durch das Navigationsmodul, beispielsweise für interne Routenberechnung, und Bedienteilrechner, beispielsweise zur Erzeugen einer Darstellung eines Ausschnitts der digitalen Kartenbasis auf dem Anzeigegerät, zu Zugriffskonflikten kommen. Weiterhin sind in den digitalen Kartenbasen die enthaltenen Elemente "direkt" beschrieben, d.h. eine Autobahn ist eine Straße der Klasse "Motorway" mit einer Nummer. Es hat sich gezeigt, dass eine Standardisierung und Einigung über die Klassifizierung von Kartenelementen nur auf einem sehr unbefriedigenden, für eine Darstellungserzeugung nicht tauglichen Niveau möglich ist.

Auf den digitalen Kartenbasen ist es nicht sinnvoll für jede mögliche Zoom-Stufe und jedes mögliche Display eine für den jeweiligen Bildschirmausschnitt optimale Vorberechnung der sinnvollen Darstellungselemente vorzunehmen. Deshalb muss bei der Darstellungserzeugung im Bedienteil entschieden werden, welche Elemente gezeichnet und welche Elemente unterdrückt werden sollen. Eine weitere Schwierigkeit liegt darin, dass einzelne Darstellungselemente sich gegenseitig überdecken können, wie beispielsweise eine Insel einen See. Auch diese relative Überdeckung muss an der Schnittstelle erkennbar werden. Ferner sind in der Regel Höheninformationen nicht in der digitalen Kartenbasis eines Fahrzeugnavigationssystems enthalten.

Bei den üblicherweise verwendeten "direkt" oder absolut kodierten digitalen Karten nach dem Stand der Technik ist es nachteilig, dass die in der Anzeigeeinheit realisierten Ausdünnungsalgorithmen nur mit jeweils einem im Detail bekannten physikalischen Datenformat funktionsfähig sind.

### Darstellung der Erfindung, Aufgabe, Lösung, Vorteile

Es ist Aufgabe der vorliegenden Erfindung, ein verbessertes Verfahren, eine verbesserte digitale Kartenbasis, ein verbessertes Navigationssystem und eine verbesserte Schnittstelle der obengenannten Art zur Verfügung zu stellen, welche die obengenannten Nachteile beseitigen und eine übersichtliche Darstellung von Ausschnitten der digitalen Kartenbasis dynamisch, d.h. sich an jeweils aktuelle Anforderungen anpassend, erzielen.

Diese Aufgabe wird durch ein Verfahren der o.g. Art mit den in Anspruch 1 gekennzeichneten Merkmalen, durch eine Kartenbasis der o.g. Art mit den in Anspruch 11 gekennzeichneten Merkmalen, durch ein Bedienteil der o.g. Art mit den in Anspruch 17 gekennzeichneten Merkmalen, mit einem Navigationssystem mit den in Anspruch 24 gekennzeichneten Merkmalen und durch eine Schnittstelle der o.g. Art mit den in Anspruch 27 gekennzeichneten Merkmalen gelöst.

Dazu ist es bei einem Verfahren der o.g. Art erfindungsgemäß vorgesehen, dass ein Attribut der geographischen Elemente ausgewertet wird, welches eine Darstellungspriorität bestimmt, wobei in Abhängigkeit von dem darzustellenden Ausschnitt und der Darstellungspriorität für jedes geographische Element, dem eine Darstellungspriorität zugeordnet ist, festgelegt wird, ob es auf dem darzustellenden Ausschnitt sichtbar ist oder nicht.

Dies hat den Vorteil, dass man für einen jeweiligen Bildschirminhalt einer Darstellung eines Ausschnittes der digitalen Kartenbasis eine optimale "Ausdünnung" der dargestellten Informationen erzielt und so für verschiedene Darstellungen eine sich beispielsweise mittels eines geeigneten Algorithmus selbst an die momentane Darstellung anpassende Übersichtlichkeit erzielt.

Vorzugsweise Weitergestaltungen des Verfahrens sind in den Ansprüchen 2 bis 10 beschrieben.

Eine immer detaillierte Darstellung mit immer kleinerem Maßstab erzielt man dadurch, dass ein Grenzwert für die Darstellungspriorität, insbesondere in Abhängigkeit von einer Anzahl der dargestellten Elemente oder in Abhängigkeit von einem jeweiligen Maßstab des momentan dargestellten Ausschnittes, dynamisch bestimmt wird, wobei nur solche geographischen Elemente dargestellt werden, deren jeweilige Darstellungspriorität den Grenzwert überschreitet.

Eine unterschiedliche Ausdünnung für verschiedene Bereiche der digitalen Kartenbasis erzielt man dadurch, dass in Abhängigkeit von einem jeweiligen darzustellenden Ausschnitt der digitalen Kartenbasis Wertebereichen der Darstellungspriorität jeweilige Zustände "darstellen" oder "nicht darstellen" zugeordnet werden. So kann man beispielsweise erreichen, dass auf einer Übersichtkarte im Ruhrgebiet im wesentlichen nur Autobahnen sichtbar sind, während auf einer Übersichtskarte von Arizona auch noch Straßen und Wege mit niedriger Darstellungspriorität dargestellt werden.

Eine wirklichkeitsnahe Darstellung trotz üblicherweise in der digitalen Kartenbasis fehlender Höheninformation erzielt man dadurch, dass in den Daten für geographische Elemente eine relative Überdeckung (Z-Level) attributiert wird, wobei die geographischen Elemente in der Reihenfolge mit aufsteigendem Z-Level auf dem Anzeigegerät gezeichnet werden. So erhält beispielsweise eine Insel einen höheren Z-Level als das zugehörige Gewässer. Es wird dann zunächst das Gewässer und danach die Insel gezeichnet. Dadurch ist sichergestellt, dass die Insel über dem Gewässer und nicht von diesem verdeckt dargestellt wird.

Zweckmäßigerweise werden die Attribute der Darstellungspriorität den geographischen Elementen bereits in der digitalen Datenbasis oder an einer Schnittstelle zwischen der digitalen Datenbasis und dem Anzeigegerät zugeordnet.

Jeweilige Prioritätswerte der Darstellungspriorität werden relativ in einem entsprechenden Bildschirmausschnitt angewendet und sind nicht absolut aufzufassen.

Ferner ist es bei einer digitalen Kartenbasis der o.g. Art erfindungsgemäß vorgesehen, dass den geographischen Elementen wenigstens teilweise ein zusätzliches Attribut zugeordnet ist, welches eine Darstellungspriorität bestimmt und bei einer Darstellung von geographischen Elementen aus einem Ausschnitt der digitalen Kartenbasis auf einem Anzeigegerät bestimmt, ob bei einer jeweiligen Darstellung jeweilige, in dem Ausschnitt befindliche geographische Elemente tatsächlich auf dem Anzeigegerät sichtbar sind oder nicht.

Dies hat den Vorteil, dass man für einen jeweiligen Bildschirminhalt einer Darstellung eines Ausschnittes der digitalen Kartenbasis eine optimale "Ausdünnung" der dargestellten Informationen erzielt und so für verschiedene Darstellungen eine sich beispielsweise mittels eines geeigneten Algorithmus selbst an die momentane Darstellung anpassende Übersichtlichkeit erzielt.

Vorzugsweise Weitergestaltungen der digitalen Kartenbasis sind in den Ansprüchen 12 bis 16 beschrieben.

Eine unterschiedliche Ausdünnung für verschiedene Bereiche der digitalen Kartenbasis erzielt man dadurch, dass bestimmten Bereichen der digitalen Kartenbasis jeweilige Auswahlregeln für die Darstellungspriorität zugeordnet sind, wobei die Auswahlregeln eine Zuordnung von Wertebereichen der Darstellungspriorität zu den Zuständen "darstellen" oder "nicht darstellen" festlegen. So kann man beispielsweise erreichen, dass auf einer Übersichtkarte im Ruhrgebiet im wesentlichen nur Autobahnen sichtbar sind, während auf einer Übersichtskarte von Arizona auch noch Straßen und Wege mit niedriger Darstellungspriorität dargestellt werden.

Eine wirklichkeitsnahe Darstellung trotz üblicherweise in der digitalen Kartenbasis fehlender Höheninformation erzielt man dadurch, dass in der digitalen Kartenbasis für die geographischen Elementen eine relative Überdeckung (Z-Level) attributiert ist. Werden nun geographischen Elemente in der Reihenfolge ihres aufsteigenden Z-Levels auf dem Anzeigegerät gezeichnet, ergibt sich die vorgenannte wirklichkeitsnahe Darstellung. So erhält beispielsweise eine Insel einen höheren Z-Level als das zugehörige Gewässer. Es wird dann zunächst das Gewässer und danach die Insel gezeichnet. Dadurch ist sichergestellt, dass die Insel über dem Gewässer und nicht von diesem verdeckt dargestellt wird.

Ferner ist es bei einem Bediengerät der o.g. Art erfindungsgemäß vorgesehen, dass das Bediengerät eine Attributauswerteinrichtung zum Auswerten eines Attributs der geographischen Elemente aufweist, welches eine Darstellungspriorität bestimmt, wobei die Attributauswerteinrichtung in Abhängigkeit von dem darzustellenden Ausschnitt und der Darstellungspriorität für jedes geographische Element, dem eine Darstellungspriorität zugeordnet ist, festlegt, ob es auf dem darzustellenden Ausschnitt sichtbar ist oder nicht.

Dies hat den Vorteil, dass man für einen jeweiligen Bildschirminhalt einer Darstellung eines Ausschnittes der digitalen Kartenbasis eine optimale "Ausdünnung" der dargestellten Informationen erzielt und so für verschiedene Darstellung eine sich beispielsweise mittels eines geeigneten Algorithmus selbst an die momentane Darstellung anpassende Übersichtlichkeit erzielt.

Vorzugsweise Weitergestaltungen des Bediengeräts sind in den Ansprüchen 18 bis 23 beschrieben.

Eine immer detailliertere Darstellung mit immer kleinerem Maßstab erzielt man dadurch, dass die Attributauswerteinrichtung derart ausgebildet ist, dass sie einen Grenzwert für die Darstellungspriorität, insbesondere in Abhängigkeit von einer Anzahl der dargestellten Elemente oder in Abhängigkeit von einem jeweiligen Maßstab des momentan dargestellten Ausschnittes, dynamisch bestimmt, und nur solche geographischen Elemente darstellt, deren jeweilige Darstellungspriorität den Grenzwert überschreitet.

Eine unterschiedliche Ausdünnung für verschiedene Bereiche der digitalen Kartenbasis erzielt man dadurch, dass die Attributauswerteinrichtung derart ausgebildet ist, dass sie in Abhängigkeit von einem jeweiligen darzustellenden Ausschnitt der digitalen Kartenbasis Wertebereichen der Darstellungspriorität jeweilige Zustände "darstellen" oder "nicht darstellen" zuordnet. So kann man beispielsweise erreichen, dass auf einer Übersichtskarte im Ruhrgebiet im wesentlichen nur Autobahnen sichtbar sind, während auf einer Übersichtskarte von Arizona auch noch Straßen und Wege mit niedriger Darstellungspriorität dargestellt werden.

Eine wirklichkeitsnahe Darstellung trotz üblicherweise in der digitalen Kartenbasis fehlender Höheninformation erzielt man dadurch, dass in der digitalen Kartenbasis für die geographischen Elementen eine relative Überdeckung (Z-Level) attributiert ist, wobei die Attributauswerteinrichtung derart ausgebildet ist, dass sie geographische Elemente in der Reihenfolge ihres aufsteigenden Z-Levels auf dem Anzeigegerät zeichnet. So erhält beispielsweise eine Insel einen höheren Z-Level als das zugehörige Gewässer. Es wird dann zunächst das Gewässer und danach die Insel gezeichnet. Dadurch ist sichergestellt, dass die Insel über dem Gewässer und nicht von diesem verdeckt dargestellt wird.

Ferner ist es bei einem Navigationssystem der o.g. Art erfindungsgemäß vorgesehen, dass die digitale Kartenbasis und das Bediengerät wie zuvor beschrieben ausgebildet sind.

Dies hat den Vorteil, dass man für einen jeweiligen Bildschirminhalt einer Darstellung eines Ausschnittes der digitalen Kartenbasis eine optimale "Ausdünnung" der dargestellten Informationen erzielt und so für verschiedene Darstellung eine sich beispielsweise mittels eines geeigneten Algorithmus selbst an die momentane Darstellung anpassende Übersichtlichkeit erzielt.

Vorzugsweise Weitergestaltungen des Navigationssystems sind in den Ansprüchen 25 und 26 beschrieben.

In einer bevorzugten Ausführungsform enthält das Navigationsmodul die digitale Kartenbasis auf einem Datenträger gespeichert oder ruft momentan benötigte Daten aus der digitale Kartenbasis über eine Datenverbindung, insbesondere über eine Datenfunkverbindung, von einem bzgl. des Navigationssystems externen Ort ab.

Zum zusätzlichen Berücksichtigen von aktuellen, sich ständig verändernden Verkehrsmeldungen für eine Darstellung und Routenberechnung im Navigationssystem ist eine Einrichtung zum Empfangen und Einbinden von aktuellen Verkehrsinformationen, insbesondere mittels RDS-TMC, in die zur Navigation aus der digitalen Datenbasis entnommenen Daten vorgesehen.

Ferner ist es bei einer Schnittstelle der o.g. Art erfindungsgemäß vorgesehen, dass die Schnittstelle derart ausgebildet ist, dass diese bei der Übergabe von Daten aus der digitalen Datenbasis an das Anzeigegerät einzelnen geographischen Elementen eine Darstellungspriorität derart zuordnet, dass festgelegt ist, ob in Abhängigkeit von dem darzustellenden Ausschnitt und der Darstellungspriorität ein geographisches Element, dem eine Darstellungspriorität zugeordnet ist, auf dem darzustellenden Ausschnitt sichtbar ist oder nicht.

Dies hat den Vorteil, dass man für einen jeweiligen Bildschirminhalt einer Darstellung eines Ausschnittes der digitalen Kartenbasis eine optimale "Ausdünnung" der dargestellten Informationen erzielt und so für verschiedene Darstellungen eine sich beispielsweise mittels eines geeigneten Algorithmus selbst an die momentane Darstellung anpassende Übersichtlichkeit erzielt.

Eine bevorzugte Weiterbildung der Schnittstelle ist in Anspruch 28 beschrieben.

Zweckmäßigerweise verbindet die Schnittstelle ein Bedienteil und ein Navigationsmodul eines Navigationssystems miteinander.

Die geographischen Elemente umfassen beispielsweise Straßen und Wege für Kraftfahrzeuge, Berge, Seen, Wälder, Bebauung, Restaurants, Hotels oder Sehenswürdigkeiten u.ä.. Die Attribute der geographischen Elemente umfassen beispielsweise Fahrtrichtung, Geschwindigkeitsbeschränkung oder Straßenschilder für Straßen und Wege. Ferner sind die geographischen Elemente der digitalen Kartenbasis zweckmäßigerweise als Daten auf einem Datenträger, wie beispielsweise einer CD-ROM, gespeichert.

### Kurze Beschreibung der Zeichnungen

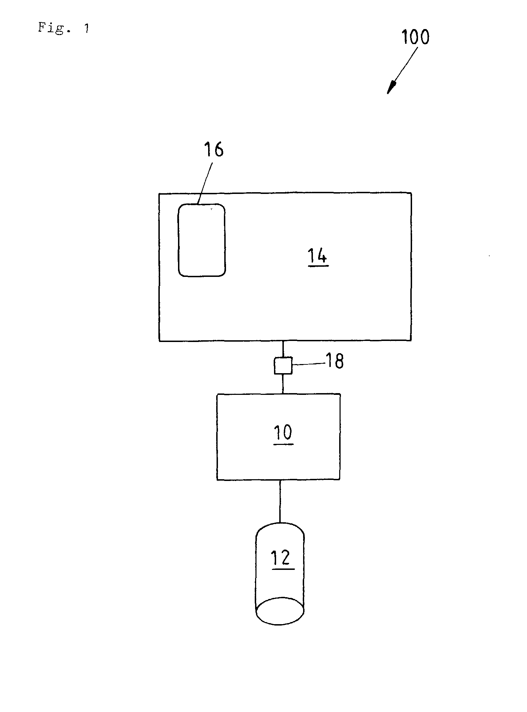

Nachstehend wird die Erfindung anhand der beigefügten Zeichnung näher erläutert. Diese zeigt in
- Fig. 1: ein Blockschaltbild eines Teils eines Navigationssystems,
- Fig. 2: einen ersten Ausschnitt einer beispielhaften Bildschirmdarstellung,
- Fig. 3: einen zweiten Ausschnitt einer beispielhaften Bildschirmdarstellung und

Fig. 4 einen dritten Ausschnitt einer beispielhaften Bildschirmdarstellung.

### Bester Weg zur Ausführung der Erfindung

Das in der einzigen Fig. beispielhaft dargestellte Navigationssystem 100 umfasst ein Navigationsmodul 10 mit einer digitalen Kartenbasis 12, und ein Bedienteil 14 mit einem Anzeigegerät 16, wie beispielsweise einem LCD-Flachbildschirm. Zwischen Bedienteil 14 und Navigationsmodul 10 ist eine Schnittstelle 18 angeordnet.

An der Schnittstelle 18 zum Zugriff auf die digitale Karte 12 werden alle Darstellungselemente mit einem Attribut zur relativen "Wichtigkeit" der Darstellungselemente untereinander versehen. Mit dem Begriff "Darstellungselemente" sollen hierin alle geographischen Elemente einer digitalen Kartenbasis 12 bezeichnet sein, wie beispielsweise Straßen, Wege, Berge, Seen, Inseln oder Wälder sowie auch zusätzliche Elemente wie Hotels, Sehenswürdigkeiten, Restaurants oder ähnliches.

Dieses Attribut der "Wichtigkeit" wird willkürlich vom Hersteller der digitalen Karte 12 vergeben. Es ist während der Datenerhebung nicht objektiv messbar.

Dieses Attribut kann, gegebenenfalls parallel mit anderen Kriterien, im Bedienteil 14 ausgewertet werden, um eine für einen Bildschirminhalt optimale "Ausdünnung" bei der Darstellung von Teilen der digitalen Karte 12 zu ermöglichen.

Der Hersteller der digitalen Karte 12 kann beispielsweise die Autobahnen mit einstelliger Nummer mit einer hohen relativen Wichtigkeit bzw. Darstellungspriorität und die Autobahnen mit dreistelligen Nummern mit einer niedrigeren relativen Wichtigkeit bzw. Darstellungspriorität versehen. In einem anderen Bereich der digitalen Karte 12 ist eine besonders wichtige Bundesstraße beispielsweise mit höherer Priorität als ein kurzer Autobahnzubringer versehen. Durch die Vergabe von relativen Prioritäten bzw. Darstellungsprioritäten als Attribut der "Wichtigkeit" kann dann ein durch den Hersteller der digitalen Karte 12 gesteuerter Ausdünnungsalgorithmus im Bedienteil 14 realisiert werden.

Zur Ermöglichung der bedarfsgerechten Erzeugung von Kartendarstellungen auf unterschiedlichen Bildschirmen und in unterschiedlichen Maßstäben werden die Darstellungselemente einer digitalen Karte 12, wie bereits zuvor erwähnt, mit einer relativen Wichtung versehen. Diese relative Wichtung, relativ zu anderen Darstellungselementen, wird im Bedienteil 14 dazu genutzt, um Ausdünnungseffekte beim Wechsel der Maßstäbe oder auch beim Wechsel zu einem anderen Ausschnitt auf der digitalen Karte 12 zu erzeugen. Der Vorteil der relativen Wichtung liegt darin, dass die Kriterien zur Vergabe der Wichtung anhand von willkürlichen Regeln durch den Hersteller der digitalen Karte 12 erzeugt werden und im Bedienteil 14 nicht bekannt sein müssen.

Das Verfahren der relativen Wichtung ist auf alle Darstellungselemente einer digitalen Karte 12 anwendbar. Es ist keine Einigung über die Attributierung der Kartenelemente nötig. Ferner kann die relative Wichtung auch nachträglich den Daten der digitalen Kartenbasis 12 zugeführt werden. Ferner kann die relative Wichtung auch nachträglich zugeführten Darstellungselementen zugeordnet werden. Eine Standardisierung der Darstellungselemente ist hierbei nicht erforderlich.

Das Verfahren kann fernerhin bei allen Schnittstellen 18 zur digitalen Karte 12 eingesetzt werden. In vorteilhafter Weise ist diese Schnittstelle 18 zwischen dem Navigationsmodul 10 und dem Bedienteil 14 im Fahrzeug angeordnet. Aber auch zwischen Fahrzeug und Dateninfrastruktur (Telematik) über drahtlose Datenverbindungen ist eine derartige Schnittstelle 18 realisierbar. Die Daten müssen nicht notwendigerweise auf einem Datenträger enthalten sein. Ferner können die Straßendaten mit eigener relativer Wichtung auf einer CD enthalten sein. Zusätzliche Informationen in Form von Verkehrsinformationen kommen beispielsweise über RDS-TMC und Informationen über Routen werden beispielsweise im Navigationssystem selbst erzeugt. Das erfindungsgemäße Verfahren ist für alle diese Daten anwendbar.

Zusätzlich kann in den Daten noch eine relative Überdeckung (Z-Level) attributiert werden. Hierdurch kann angegeben werden, welches Darstellungselement in der Darstellung über anderen Darstellungselementen gezeichnet werden soll. Eine Insel wird dabei einen "höheren" Z-Level als das Gewässer erhalten. Das darstellende Gerät 16 kann dann erst die Elemente mit niedrigeren Z-Level und anschließend die Elemente mit höheren Z-Level zeichnen. Damit ist es möglich, wirklichkeitsnahe Darstellungen von Karten zu erzeugen, ohne dass genaue Höheninformationen vorliegen.

Dieser vorgenannte "Z-Level" kann auch in der Wichtung selbst integriert sein, indem z.B. die Insel eine höhere Wichtung erhält, als das Gewässer. In dem Bedienteil 14 ist dann ein Algorithmus vorgesehen, welcher zuerst Darstellungselemente mit niedrigerer Wichtung und danach Darstellungselemente mit zunehmender Wichtung zeichnet. Hierbei ist selbstverständlich darauf zu achten, dass nicht versehentlich zusammengehörige Darstellungselemente, wie beispielsweise Insel und Gewässer, in ihrer Wichtung derart voneinander getrennt werden, dass sie von einem Algorithmus im Bedienteil 14 nicht zusammengezeichnet werden. Sofern in dem Bedienteil 14 eine Zuordnung stattfindet von Bereichen von Wichtungswerten und den Zuständen "darstellen" und "nicht darstellen" sollten daher solche zusammengehörigen Darstellungselemente, wie Insel und Gewässer, dem gleichen Wichtungswertebereich zugeordnet sein.

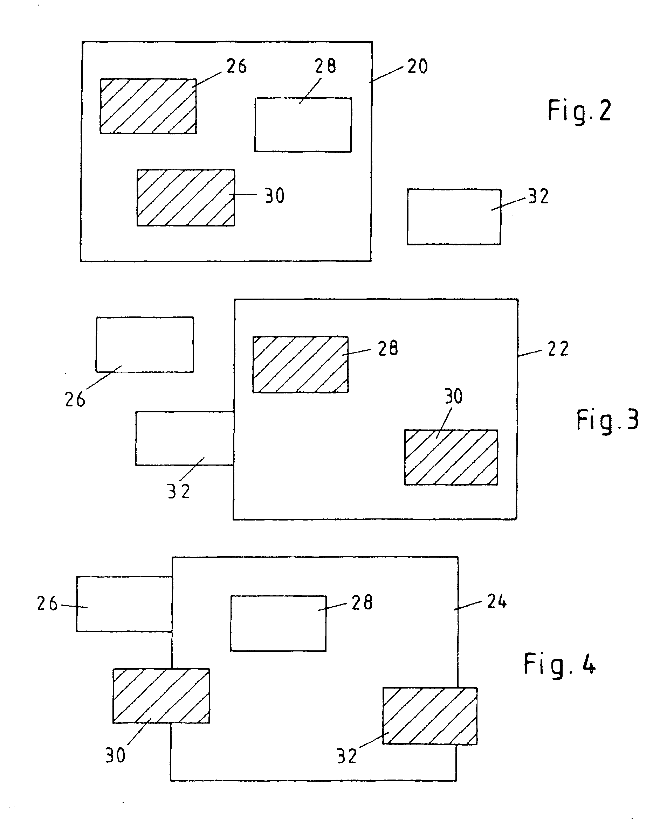

Jeweilige Prioritätswerte der Darstellungspriorität werden bevorzugt relativ in einem entsprechenden Bildschirmausschnitt 20, 22, 24 angewendet und sind nicht absolut aufzufassen. Dies soll nachfolgend anhand von Fig. 2 bis 4 näher erläutert werden. Diese zeigen jeweils einen ersten, zweiten und dritten Ausschnitt 20, 22 und 24 einer Bildschirmdarstellung, nachfolgend auch Bildschirmausschnitt genannt, mit einer A-Stadt 26 mit Prioritätswert vier, einer B-Stadt 28 mit Prioritätswert drei, einer C-Stadt 30 mit Prioritätswert vier und einer D-Stadt 32 mit Prioritätswert drei. In drei Szenarien sind jeweils in der digitalen Karte die vier Städte 26, 28, 30 und 32 mit unterschiedlichen Prioritätswerten kombiniert.

Es seien nun zwei nicht in der digitalen Kartenbasis vorherbestimmte, d.h. vom Darstellungsgerät willkürlich gewählte Regeln, dass in einem Bildschirmausschnitt 20, 22, 24 nur zwei Städte erscheinen dürfen und die Häufung von Städten in einem Bildschirmausschnitt 20, 22, 24 zu minimieren ist, d.h. es werden nicht alle nahe beieinander liegenden Städte in einem Bildschirmausschnitt dargestellt, sondern es werden zur Darstellung solche Städte ausgewählt, welche möglichst weit voneinander entfernt sind, so dass die dargestellten Städte auf dem Bildschirmausschnitt 20, 22 24 möglichst gleichmäßig verteilt sind. In den Darstellungen gemäß der Fig. 2 bis 4 symbolisiert eine Schraffur, dass die entsprechende Stadt in dem Bildschirmausschnitt dargestellt wird. Kästchen ohne Schraffur symbolisieren, dass die entsprechende Stadt nicht dargestellt wird.

Im ersten Ausschnitt 20 gemäß Fig. 2 führt dieses bei einer relativen Bewertung aller im Ausschnitt vorhandenen Städte 26, 28 und 30 zur Unterdrückung der Stadt mit dem niedrigsten Prioritätswert, nämlich der B-Stadt 28. Im zweiten Ausschnitt gemäß Fig. 3 sind weniger Städte 28 und 30 enthalten, deshalb wird hier auch die B-Stadt 28 dargestellt. Im dritten Ausschnitt 24 gemäß Fig. 4 sind zwei Kandidaten mit gleicher Darstellungspriorität "Streichkandidaten", nämlich B-Stadt 28 und D-Stadt 32. Hier kommt bei gleichem Prioritätswert, nämlich dem Wert drei, die Kombination mit der Regel "Minimierung der Häufung von Städten innerhalb eines Bildschirmausschnittes 24" zu Anwendung. Es wird deshalb B-Stadt 28 unterdrückt.

## Patentansprüche

1. Verfahren zum Darstellen von Ausschnitten einer digitalen Kartenbasis, welche ein Abbild von realen geographischen Bereichen ist, auf einem Anzeigegerät, wobei die digitale Kartenbasis Daten von geographischen Elementen enthält,
dadurch gekennzeichnet, dass
ein Attribut der geographischen Elemente ausgewertet wird, welches eine Darstellungspriorität bestimmt, wobei in Abhängigkeit von dem darzustellenden Ausschnitt und der Darstellungspriorität für jedes geographische Element, dem eine Darstellungspriorität zugeordnet ist, festgelegt wird, ob es auf dem darzustellenden Ausschnitt sichtbar ist oder nicht.

2. Verfahren nach Anspruch 1,
dadurch gekennzeichnet, dass
ein Grenzwert für die Darstellungspriorität, insbesondere in Abhängigkeit von einer Anzahl der dargestellten Elemente oder in Abhängigkeit von einem jeweiligen Maßstab des momentan dargestellten Ausschnittes, dynamisch bestimmt wird, wobei nur solche geographischen Elemente dargestellt werden, deren jeweilige Darstellungspriorität den Grenzwert überschreitet.

3. Verfahren nach Anspruch 1 oder 2,
dadurch gekennzeichnet, dass
in Abhängigkeit von einem jeweiligen darzustellenden Ausschnitt der digitalen Kartenbasis Wertebereichen der Darstellungspriorität jeweilige Zustände "darstellen" oder "nicht darstellen" zugeordnet werden.

4. Verfahren nach einem der vorhergehenden Ansprüche,
dadurch gekennzeichnet, dass
in den Daten für geographische Elemente eine relative Überdekkung (Z-Level) attributiert wird, wobei die geographischen Elemente in der Reihenfolge mit aufsteigendem Z-Level auf dem Anzeigegerät gezeichnet werden.

5. Verfahren nach einem der vorhergehenden Ansprüche,
dadurch gekennzeichnet, dass
die geographischen Elemente Straßen und Wege für Kraftfahrzeuge, Berge, Seen, Wälder, Bebauung, Restaurants, Hotels oder Sehenswürdigkeiten u.ä. umfassen.

6. Verfahren nach einem der vorhergehenden Ansprüche,
dadurch gekennzeichnet, dass
die Attribute der geographischen Elemente Fahrtrichtung, Geschwindigkeitsbeschränkung oder Straßenschilder für Straßen und Wege umfassen.

7. Verfahren nach einem der vorhergehenden Ansprüche,
dadurch gekennzeichnet, dass
die geographischen Elemente der digitalen Kartenbasis als Daten auf einem Datenträger gespeichert sind.

8. Verfahren nach einem der vorhergehenden Ansprüche,
dadurch gekennzeichnet, dass
die Attribute der Darstellungspriorität den geographischen Elementen bereits in der digitalen Datenbasis oder an einer Schnittstelle zwischen der digitalen Datenbasis und dem Anzeigegerät zugeordnet werden.

9. Verfahren nach einem der vorhergehenden Ansprüche,
dadurch gekennzeichnet, dass
jeweilige Prioritätswerte der Darstellungspriorität relativ in einem entsprechenden Bildschirmausschnitt angewendet werden.

10. Verfahren nach einem der vorhergehenden Ansprüche,
dadurch gekennzeichnet, dass
jeweilige Prioritätswerte der Darstellungspriorität mit anderen, über die Sichtbarkeit eines jeweiligen geographischen Elementes entscheidende Attribute kombiniert werden.

11. Digitale Kartenbasis (12) als Abbild von realen geographischen Bereichen, wobei die digitale Kartenbasis (12) Daten von geographischen Elementen enthält und jedem geographischen Element Attribute zugeordnet sind,
dadurch gekennzeichnet, dass
den geographischen Elementen wenigstens teilweise ein zusätzliches Attribut zugeordnet ist, welches eine Darstellungspriorität bestimmt und bei einer Darstellung von geographischen Elementen aus einem Ausschnitt der digitalen Kartenbasis (12) auf einem Anzeigegerät (16) bestimmt, ob bei einer jeweiligen Darstellung jeweilige, in dem Ausschnitt befindliche geographische Elemente tatsächlich auf dem Anzeigegerät (16) sichtbar sind oder nicht.

12. Digitale Kartenbasis (12) nach Anspruch 11,
dadurch gekennzeichnet, dass
bestimmten Bereichen der digitalen Kartenbasis (12) jeweilige Auswahlregeln für die Darstellungspriorität zugeordnet sind, wobei die Auswahlregeln eine Zuordnung von Wertebereichen der Darstellungspriorität zu den Zuständen "darstellen" oder "nicht darstellen" festlegen.

13. Digitale Kartenbasis (12) nach Anspruch 11 oder 12,
dadurch gekennzeichnet, dass
die geographischen Elementen der digitalen Kartenbasis (12) als Daten auf einem Datenträger gespeichert sind.

14. Digitale Kartenbasis (12) nach einem der Ansprüche 11 bis 13,
dadurch gekennzeichnet, dass
die geographischen Elemente Straßen und Wege für Kraftfahrzeuge, Berge, Seen, Wälder, Bebauung, Restaurants, Hotels oder Sehenswürdigkeiten u.ä. umfassen.

15. Digitale Kartenbasis (12) nach einem der Ansprüche 11 bis 14,
dadurch gekennzeichnet, dass
die Attribute der geographischen Elemente Fahrtrichtung, Geschwindigkeitsbeschränkung oder Straßenschilder für Straßen und Wege umfassen.

16. Digitale Kartenbasis (12) nach einem der Ansprüche 11 bis 15,
dadurch gekennzeichnet, dass
in der digitalen Kartenbasis für die geographischen Elementen eine relative Überdeckung (Z-Level) attributiert ist.

17. Bediengerät (14) für ein Navigationssystem (100) mit einem Anzeigegerät (16) zum Darstellen von einem Ausschnitt einer digitalen Kartenbasis (12), welche ein Abbild von realen geographischen Bereichen ist, wobei die digitale Kartenbasis (12) Daten von geographischen Elementen enthält,
dadurch gekennzeichnet, dass
das Bediengerät (14) eine Attributauswerteinrichtung zum Auswerten eines Attributs der geographischen Elemente aufweist, welches eine Darstellungspriorität bestimmt, wobei die Attributauswerteinrichtung in Abhängigkeit von dem darzustellenden Ausschnitt und der Darstellungspriorität für jedes geographische Element, dem eine Darstellungspriorität zugeordnet ist, festlegt, ob es auf dem darzustellenden Ausschnitt sichtbar ist oder nicht.

18. Bediengerät (14) nach Anspruch 17,
dadurch gekennzeichnet, dass
die Attributauswerteinrichtung derart ausgebildet ist, dass sie einen Grenzwert für die Darstellungspriorität, insbesondere in Abhängigkeit von einer Anzahl der dargestellten Elemente oder in Abhängigkeit von einem jeweiligen Maßstab des momentan dargestellten Ausschnittes, dynamisch bestimmt, und nur solche geographischen Elemente darstellt, deren jeweilige Darstellungspriorität den Grenzwert überschreitet.

19. Bediengerät (14) nach Anspruch 17 oder 18,
dadurch gekennzeichnet, dass
die Attributauswerteinrichtung derart ausgebildet ist, dass sie in Abhängigkeit von einem jeweiligen darzustellenden Ausschnitt der digitalen Kartenbasis (12) Wertebereichen der Darstellungspriorität jeweilige Zustände "darstellen" oder "nicht darstellen" zuordnet.

20. Bediengerät (14) nach einem der Ansprüche 17 bis 19,
dadurch gekennzeichnet, dass
in der digitalen Kartenbasis für die geographischen Elementen eine relative Überdeckung (Z-Level) attributiert ist, wobei die Attributauswerteinrichtung derart ausgebildet ist, dass sie geographische Elemente in der Reihenfolge ihres aufsteigenden Z-Levels auf dem Anzeigegerät (16) zeichnet.

21. Bediengerät (14) nach einem der Ansprüche 17 bis 20,
dadurch gekennzeichnet, dass
die geographischen Elemente Straßen und Wege für Kraftfahrzeuge, Berge, Seen, Wälder, Bebauung, Restaurants, Hotels oder Sehenswürdigkeiten u.ä. umfassen.

22. Bediengerät (14) nach einem der Ansprüche 17 bis 21,
dadurch gekennzeichnet, dass
die Attribute der geographischen Elemente Fahrtrichtung, Geschwindigkeitsbeschränkung oder Straßenschilder für Straßen und Wege umfassen.

23. Bediengerät (14) nach einem der Ansprüche 17 bis 22,
dadurch gekennzeichnet, dass
die geographischen Elementen der digitalen Kartenbasis (12) als Daten auf einem Datenträger gespeichert sind.

24. Navigationssystem (100) für ein Fortbewegungsmittel, insbesondere für ein Kraftfahrzeug, mit einem Navigationsmodul (10), welches eine digitale Kartenbasis (12) bereitstellt, und einem mit dem Navigationsmodul (10) verbundenen Bediengerät (14), welches ein Anzeigegerät (16) zum Anzeigen eines Ausschnittes der digitalen Kartenbasis (12) aufweist, insbesondere zum Ausführen eines Verfahrens gemäß einem der Ansprüche 1 bis 8,
dadurch gekennzeichnet, dass
die digitale Kartenbasis (12) gemäß wenigstens einem der Ansprüche 9 bis 13 und das Bediengerät (14) gemäß wenigstens einem der Ansprüche 14 bis 20 ausgebildet ist.

25. Navigationssystem (100) nach Anspruch 23,
dadurch gekennzeichnet, dass
das Navigationsmodul (10) die digitale Kartenbasis (12) auf einem Datenträger gespeichert enthält oder momentan benötigte Daten aus der digitale Kartenbasis (12) über eine Datenverbindung, insbesondere über eine Datenfunkverbindung, von einem bzgl. des Navigationssystems (100) externen Ort abruft.

26. Navigationssystem (100) nach Anspruch 24 oder 25,
dadurch gekennzeichnet, dass
eine Einrichtung zum Empfangen und Einbinden von aktuellen Verkehrsinformationen, insbesondere mittels RDS-TMC, in die zur Navigation aus der digitalen Datenbasis (12) entnommenen Daten vorgesehen ist.

27. Schnittstelle (18) zwischen einer digitalen Kartenbasis (12), welche ein Abbild von realen geographischen Bereichen ist und Daten von geographischen Elementen enthält, und einem Anzeigegerät (14, 16) zum Darstellen eines Ausschnittes der digitalen Datenbasis (12),
dadurch gekennzeichnet, dass
die Schnittstelle (18) derart ausgebildet ist, dass diese bei der Übergabe von Daten aus der digitalen Datenbasis (12) an das Anzeigegerät (14, 16) einzelnen geographischen Elementen eine Darstellungspriorität derart zuordnet, dass festgelegt ist, ob in Abhängigkeit von dem darzustellenden Ausschnitt und der Darstellungspriorität ein geographisches Elementen, dem eine Darstellungspriorität zugeordnet ist, auf dem darzustellenden Ausschnitt sichtbar ist oder nicht.

28. Schnittstelle (18) nach Anspruch 27,
dadurch gekennzeichnet, dass
diese ein Bedienteil (14) und ein Navigationsmodul (10) eines Navigationssystems miteinander verbindet.
